# EUROPEAN PATENT APPLICATION

(11) **EP 2 293 643 A1**
(43) Date of publication of application: **09.03.2011**
(21) Application number: 09804489.4
(22) Date of filing: 04.08.2009
(51) Int. Cl.: H04W 88/00

(54) **NODE, METHOD AND SYSTEM FOR A MOBILE NETWORK HIGH SPEED ACCESSING TO A PUBLIC NETWORK**

(30) Priority: 05.08.2008 CN 200810117913
(71) Applicant: Huawei Technologies Co., Ltd., Longgang District, Shenzhen Guangdong 518129 (CN)
(72) Inventor: JIANG, Ming, 518129 Shenzhen (CN); LV, Wenan, 518129 Shenzhen (CN); YANG, Wenjin, 518129 Shenzhen (CN)
(74) Representative: Kreuz, Georg Maria
(86) International application number: PCT/CN2009/073075
(87) International publication number: WO 2010/015189

(57) **Abstract**

The present invention discloses a node, method and system for high-rate access to a public network from a mobile network, where an enhanced GPRS Support Node (eGSN) is placed in a communications system and transmits information between a NodeB and the public network via a public network interface for communications between the eGSN and the public network and a NodeB interface for communications between the eGSN and the NodeB. By reducing the number of intermediate network elements for the access of a UE to the public network, the network structure is flattened. Thereby, the transmission delay is reduced and the transmission efficiency of the network is effectively increased.

## Description

This application claims priority to Chinese Patent Application No. 200810117913.6, filed with the Chinese Patent Office on August 5, 2008 and entitled "Node, Method, and System for High-Rate Access to Public Network from Mobile Network", which is incorporated herein by reference in its entirety.

### Field of the Invention

The present invention relates to network communications technologies, and in particular, to a technology for high-rate access to a public network from a mobile network.

### Background of the Invention

With the wide deployment of Third Generation (3G) networks, the applications of broadband access networks and wireless networks are wider and wider, and users must use wireless User Equipments (UEs) to enjoy high-rate, convenient and cost-effective wireless data services.

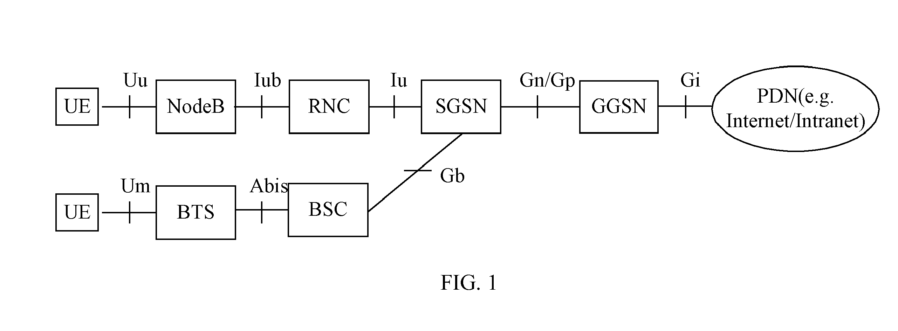

FIG. 1 shows a type of end-to-end packet-switched service provided in the logical architecture of the packet switched domain of a prior mobile network. The network consists of functional entities including the Serving GPRS Support Node (SGSN) and Gateway GPRS Support Node (GGSN) and enables the users to transmit and receive data in end-to-end packet transmission mode.

The prior art has at least the following disadvantages:

The network architecture shown in FIG. 1 has a complex structure with quite a few layers. To access a public network such as a Packet Data Network (PDN) via a NodeB, for example, a UE must traverse many network elements including the Radio Network Controller (RNC), SGSN and GGSN. This greatly affects the transmission efficiency of the network so that applications of high-rate services will not be implemented.

### Summary of the Invention

Embodiments of the present invention provide a node, method, and system for high-rate access to a public network from a mobile network to flatten the network structure and effectively improve the transmission efficiency of the network.
1. An enhanced General Packet Radio Service (GPRS) Support Node (eGSN) includes: a public network interface for communicating with a public network, a NodeB interface for communicating with a NodeB, and an information transceiving unit, configured to transmit information between the NodeB and the public network via the public network interface and the NodeB interface.

A method for high-rate access to a public network from a mobile network includes:
transmitting, by an eGSN, information between a NodeB and the public network via a public network interface of the eGSN for communicating with the public network and a NodeB interface of the eGSN for communicating with the NodeB.

A system for high-rate access to a public network from a mobile network includes at least one of the above eGSN, which is configured to provide an information transmission path between a NodeB and the public network to implement information transmission between the NodeB and the public network.

A system for high-rate access to a public network from a mobile network includes at least one of the above eGSN and at least one NodeB, where the eGSN is configured to provide an information transmission path between the NodeB and the public network to implement information transmission between the NodeB and the public network.

Thus, the technical solution of the embodiments of the present invention reduces the number of intermediate network elements for the access of a UE to a public network so that the network structure is flattened. Thereby, the transmission delay is reduced and the transmission efficiency of the network is effectively increased.

### Brief Description of the Drawings

In order to make the technical solution under the present invention clearer, the accompanying drawings for illustrating the embodiments of the present invention or the prior art are outlined below. Evidently, the accompanying drawings are for the exemplary purpose only, and those skilled in the art can derive other drawings from such accompanying drawings without any creative effort.
FIG. 1 shows a structure of a 3G network in the prior art;
FIG. 2 is a schematic drawing of the principle of the embodiments of the present invention;
FIG. 3 shows a structure of an eGSN according to an embodiment of the present invention;
FIG. 4 shows the user-plane data transmission paths according to an embodiment of the present invention;
FIG. 5 is a schematic drawing of an application system of the eGSN according to the embodiments of the present invention;
FIG. 6 shows an application system of the eGSN according to a first embodiment of the present invention;
FIG. 7 shows an application system of the eGSN according to a second embodiment of the present invention;
FIG. 8 shows an application system of the eGSN according to a third embodiment of the present invention;
FIG. 9 shows an application system of the eGSN according to a fourth embodiment of the present invention;
FIG. 10 shows an application system of the eGSN according to a fifth embodiment of the present invention;
FIG. 11 shows an application system of the eGSN according to a sixth embodiment of the present invention;
FIG. 12 is a schematic drawing of a system according to an embodiment of the present invention;
FIG. 13 is a schematic drawing of a data stream transmission procedure according to the embodiments of the present invention;
FIG. 14 shows a data stream transmission procedure according to a first embodiment of the present invention;
FIG. 15 shows a data stream transmission procedure according to a second embodiment of the present invention;
FIG. 16 is a schematic drawing of a control plane data transmission path provided according to an embodiment of the present invention; and
FIG. 17 is a schematic drawing of a procedure where an eGSN obtains path selection policy parameters according to an embodiment of the present invention.

### Detailed Description of the Embodiments

The technical solution of the present invention is hereinafter described in detail with reference to the accompanying drawings. It is evident that the embodiments are only exemplary embodiments of the present invention and the present invention is not limited to such embodiments. Those skilled in the art can derive other embodiments from the embodiments given herein without creative work, and all such embodiments are covered in the scope of protection of the present invention.

To further improve the quality and efficiency of transmission and satisfy the high-rate service requirements of users, the embodiments of the present invention provide a technical solution for high-rate access to a packet data network from a mobile network. Through a flat network structure, the technical solution effectively improves the efficiency of network transmission and utilizes the existing network devices of operators to the maximum extent. That is, the technical solution improves the network transmission efficiency without a lot of changes to the functions of existing network devices.

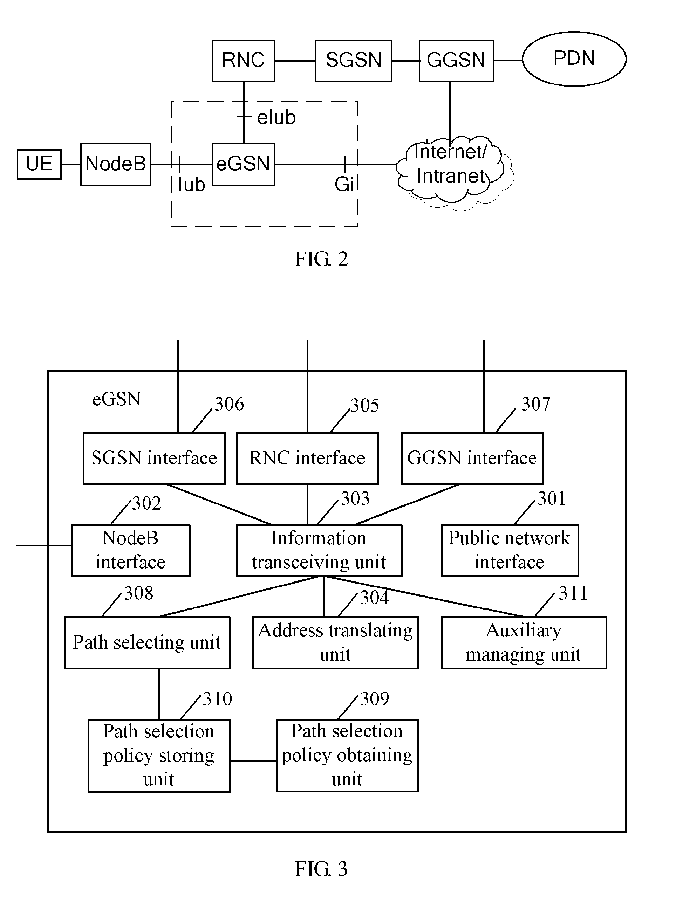

As shown in FIG. 2, a new network element, enhanced GPRS Support Node (eGSN), is adopted in an existing 3G mobile network. A NodeB can access a public network at a high rate directly through the new eGSN and the intermediate nodes in the access procedure are reduced. Thus, high-rate service requirements of users are satisfied. The public network may be but is not limited to a PDN, such as the Internet or Intranet.

FIG. 3 shows a structure of the eGSN provided in an embodiment of the present invention. The eGSN includes a public network interface 301 for communicating with a public network, a NodeB interface 302 for communicating with a NodeB, and an information transceiving unit 303 which transmits information between the NodeB and the public network via the public network interface 301 and the NodeB interface 302, so as to enable a UE of the NodeB to access the public network.

The NodeB interface may support the Iub interface (standard interface between NodeB and RNC). For example, the NodeB interface may support partial functions of the Iub interface to help connect with the NodeB so that the eGSN may function as an RNC from the perspective of the NodeB. The public network interface may support the Gi interface (standard interface between GGSN and public network). For example, the public network interface may support partial functions of the Gi interface of a GGSN so that the eGSN can communicate with the public network directly at high rates.

The eGSN may also include an address translating unit 304, configured to translate the source address in the packets sent to the public network via the public network interface to a local address of the eGSN and translate the destination address in the packets sent to a UE via the NodeB interface to the address of the UE.

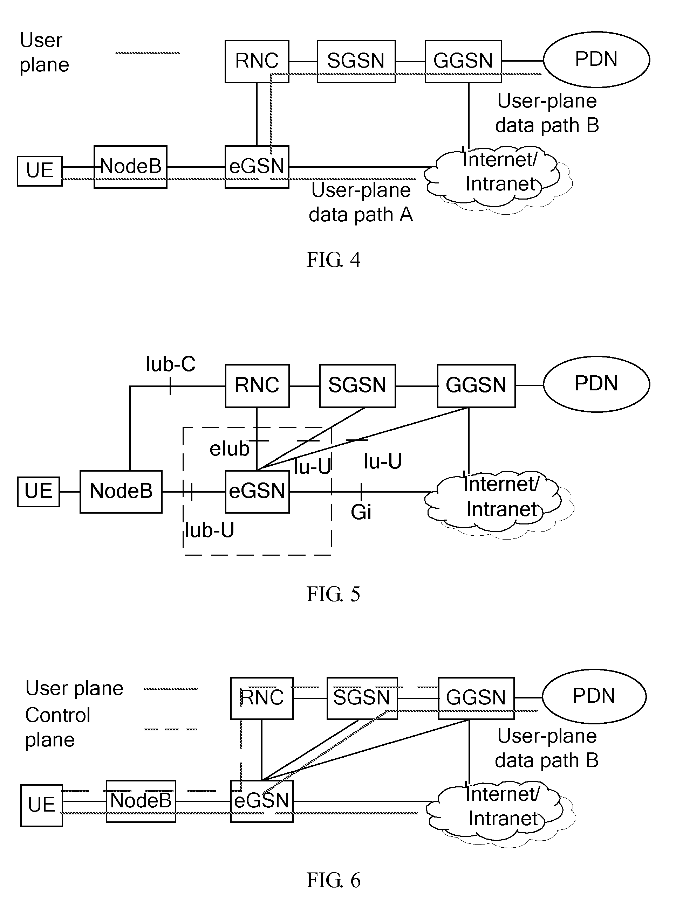

As shown in FIG. 4, the eGSN may also provide an RNC interface (or eIub interface) 305 for communicating with the RNC. The interface supports the trunk forwarding of Iub messages so as to implement the information interaction between RNC and NodeB. Thus, the eGSN can communicate with the public network through the path including RNC, SGSN and GGSN. That is, the eGSN may select a path to transmit user-plane data streams from the two user-plane data stream paths shown in FIG. 4; or the eGSN may include an SGSN interface 306 for communicating with the SGSN or a GGSN interface 307 for communicating with the GGSN. Further, as shown in FIG. 5, the eGSN may include one or more of the RNC interface (eIub) 305, SGSN interface (Iu-U) 306 and GGSN interface (Iu-U) 307. In FIG. 5, the control-plane function of the Iu interface is implemented by the RNC via the eIub interface.

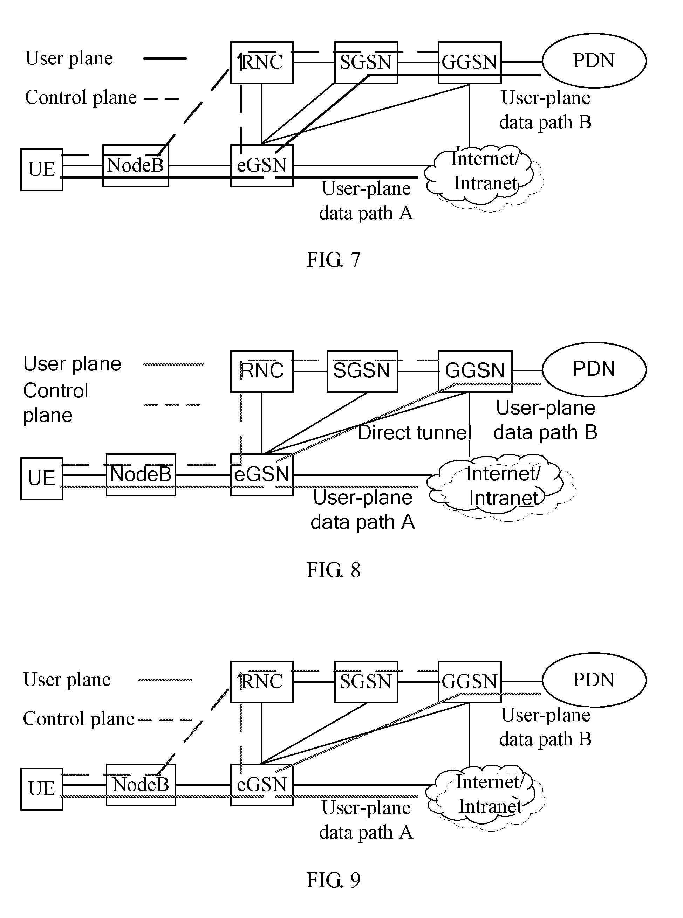

Specifically, as shown in FIG. 6 and FIG. 7, user-plane data of the Iu interface can be sent from the eGSN to the SGSN directly and then forwarded to the public network via the GGSN; or as shown in FIG. 8 and FIG. 9, user-plane data of the Iu interface may be sent directly from the eGSN to the GGSN (if the eGSN has a GGSN interface, a direct tunnel may be adopted to connect to the GGSN) and then sent to the public network.

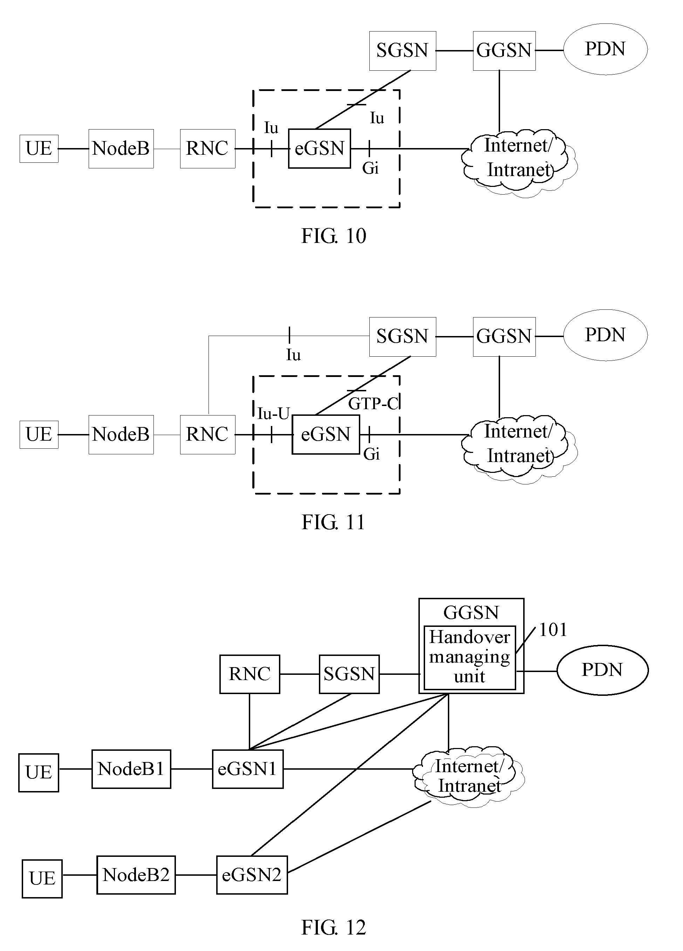

Further, as shown in FIG. 10 and FIG. 11, the eGSN may be placed between the RNC and the SGSN. In this case, the eGSN may be placed on a unique path between the RNC and the SGSN or a new path between the RNC and the SGSN. If the eGSN is placed on a new path, whether the communication between the RNC and the SGSN is realized through the eGSN may be determined according to the actual need of communications.

Specifically, the eGSN may be a standalone network element in a communications system or integrated with another network element in the communications system to form one network element. For example, the eGSN may be integrated with the RNC or the NodeB.

Further, the eGSN may also include a path selecting unit 308, which is configured to select to send information from the NodeB via the RNC interface 305, SGSN interface 306, GGSN interface 307, or public network interface 301 according to a predetermined path selection policy. In addition to providing the routing and encapsulation of user-plane data packets between the packet switched domain of a mobile network and an external data network, the eGSN may also select a path according to different path selection policies to access a data stream to the external data network, that is, a public network such as a PDN. The path may be the eGSN-RNC-SGSN-GGSN path shown in FIG. 4, or the eGSN-SGSN-GGSN path shown in FIG. 5, or the eGSN-GGSN path shown in Fig.5.

The path selection policy may be information of a path selection mode predetermined according to at least one of the following items: subscription information of the user, Access Point Name (APN), Quality of Service (QoS) parameter, and service type. That is, the policy decides what data streams should be transmitted via the public network interface of the eGSN according to one or more items of subscription information of the user, APN, QoS parameter, and service type, or what data streams should not be transmitted via the public network interface of the eGSN. For example, the policy may define that data streams of a specified service type are transmitted via the public network interface of the eGSN; or the policy may define that data streams meeting a certain QoS requirement are transmitted via the public network interface of the eGSN; or the policy may define that the data streams of a certain user of a certain service type are transmitted via the public network interface of the eGSN.

To provide the path selecting unit of the eGSN with the path selection policy, the eGSN may further include a path selection policy obtaining unit 309 and a path selection policy storing unit 310.

The path selection policy obtaining unit 309 is configured to: obtain a path selection policy, or obtain a path selection policy parameter and generate a path selection policy according to the path selection policy parameter, where the path selection policy or path selection policy parameter may be obtained from the eGSN or received from a GGSN or another network element. If receiving a path selection policy or path selection policy parameter from the GGSN, the path selection policy obtaining unit 309 may obtain the path selection policy or path selection policy parameter from the GGSN through messages in a Packet Data Protocol (PDP) context activation procedure. The path selection policy may be information of a path selection mode predetermined according to at least one of the following items: subscription information of the user, APN, QoS parameter, and service type. The path selection policy parameter may be at least one item of subscription information of the user, APN, QoS parameter, and service type.

The path selection policy storing unit 310 is configured to store the path selection policy obtained by the path selection policy obtaining unit 309 and provide the policy for the path selecting unit 308 so that the path selecting unit 308 can select an appropriate transmission path for data streams (packets) destined for the public network according to the path selection policy.

Optionally, the eGSN may include an auxiliary managing unit 311, configured to send the data transmitted via the public network interface 301, or the traffic of data transmitted via the public interface 301, or both to the SGSN or GGSN, to implement effective intercept with respect to the eGSN and monitoring of the data traffic, and further implement the corresponding charging function. This enables effective management of the data streams directly exchanged between the UE and the public network via the eGSN, and implements charging and lawful intercept functions. Accordingly, the eIub interface of the eGSN may be functionally extended based on the above Iub interface so that the GGSN can manage and control the eGSN via the RNC; or the GGSN can control and manage the eGSN via the SGSN; or the GGSN can control and manage the eGSN directly via the interface with the eGSN.

Thus, in the embodiments of the present invention, the eGSN may access the public network through local offloading or access the public network via the GGSN. The local offloading solution means the eGSN transmits data through the public network interface with the public network or through the NodeB interface with the NodeB. Specifically, in the solution provided in the embodiments of the present invention, the eGSN may separate the data stream that can be offloaded locally (that is, the data stream that can be directly exchanged between the public network and the NodeB via the NodeB interface and the public network interface) under control of core network devices such as the SGSN or GGSN, and translate the source address of the data stream (IP address of the UE) to a locally allocated IP address of the eGSN through Network Address Translation (NAT). Thus, when other data streams are transmitted and received via the GGSN, locally offloaded data streams can also be transmitted and received via the eGSN. From the perspective of the public network such as the Internet or Intranet, data streams sent to the eGSN and GGSN have two different IP addresses so that different data packet routes can be adopted to send the streams respectively to the eGSN and the GGSN.

The solution provided by the embodiments of the present invention on the one hand enables the UE to access a public network at a high rate via the eGSN and on the other hand is compatible with the existing network structure so that the UE can adopt a conventional access path to the public network. Thus, the embodiments of the present invention implement high-rate service access based on compatibility with the prior art and thereby satisfy the high-rate service requirements of users.

Accordingly, an embodiment of the present invention provides a system for high-rate access to a public network from a mobile network. As shown in FIG. 12, the system may include one or more eGSNs, which are configured to provide information transmission paths between a NodeB and the public network so as to implement high-rate transmission of information between the NodeB and the public network. Thus, the delay ofUE access to the public network is effectively reduced and the access rate is increased.

Optionally, when the system includes more than one eGSN, if the UE is handed over between different eGSNs, the GGSN in the system may send a path selection policy or path selection policy parameter to the eGSN that corresponds to the UE after handover through a handover managing unit 101 so that the eGSN after handover can provide high-rate transmission services for the UE.

As shown in FIG. 12, the system for high-rate access to a public network from a mobile network may include at least one eGSN and at least one NodeB. The eGSN is configured to provide an information transmission path between the NodeB and the public network so as to implement the transmission of information between the NodeB and the public network.

Optionally, the system may further include an RNC, an SGSN, and a GGSN and the eGSN may communicate with the public network via the RNC, SGSN and GGSN in sequence. Or, the system may further include an SGSN and a GGSN and the eGSN may communicate with the public network via the SGSN and GGSN in sequence. Or, the system may further include a GGSN and the eGSN may communicate with the public network via the GGSN. Accordingly, the handover managing unit 101 may be placed in the GGSN to execute corresponding handover management operations.

The communication with the public network via an eGSN in the embodiments of the present invention is described in detail with reference to the accompanying drawings.

### I. Data stream interaction with the public network via the eGSN

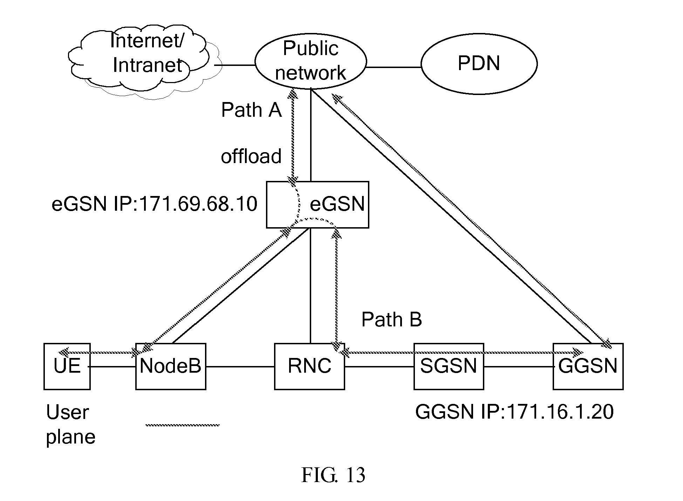

An information interaction procedure between the UE and the public network includes a procedure where the UE sends information to the public network and a procedure where the UE receives information from the public network.
1. As shown in FIG. 13, the procedure where the UE sends information to the public network includes:
   Step 1: The NodeB receives user-plane data from the UE and sends the data to the eGSN.
   Step 2: The eGSN selects a transmission path for the user-plane data from the UE according to a predetermined path selection policy.

There are two paths for selection of the eGSN: path A and path B:
Path A: UE <-> NodeB <-> eGSN <-> external PDN (public network);
Path B: UE <-> NodeB <-> eGSN <-> RNC <-> SGSN <-> GGSN <-> external PDN (public network); or UE <-> NodeB <-> eGSN <-> SGSN <-> GGSN <-> external PDN (public network); or UE <-> NodeB <-> eGSN <-> GGSN <-> external PDN (public network).

The user-plane data stream may be transmitted to the public network via the uplink path of Path A or any path B.

Specifically, the eGSN may determine data streams to be offloaded according to a path selection policy which is a filtering rule sent by the SGSN or GGSN and send the data streams via path A. Other data streams are sent via path B. That is, the eGSN supports the offloading of data streams. For example, the eGSN may be controlled by the SGSN or GGSN to offload or not to offload partial or all data streams of one UE.

The step of determine data streams to be offloaded according to the path selection policy includes but is not limited to controlling the eGSN to or not to offload data streams according to at least one of the items: service type, APN, QoS, and subscription information of the user. Thus the high-rate service requirements of high-priority and high-rate users are guaranteed in precedence. That is, the eGSN may support at least one of the following processing mechanisms:
Mechanism 1: The eGSN controls data streams to be offloaded (that is, selecting the data streams to be transmitted over path A) according to the APN. This means the eGSN may select different paths for different data streams according to different APNs.
Mechanism 2: The eGSN may determine the data streams to be offloaded according to subscription information of the user. If the subscription information of the user indicates that data streams of the user must be transmitted over path A, the data streams of the user are the data streams to be offloaded.
Mechanism 3: The eGSN may determine data streams to be offloaded according to the QoS parameter. For example, if the data stream of a certain user or a certain service type meets the predetermined QoS requirement, the data stream is regarded as a data stream to be offloaded so as to guarantee the high-rate transmission requirements of high-end users or services in precedence.
Mechanism 4: The eGSN may determine data streams to be offloaded according to the service type. In the case of a service that requires high rates (such as a video service), for example, the eGSN may select path A for direct fast access.

Different processing mechanisms enable the eGSN to control the local offloading of data streams flexibly according to the requirement on access to the public network. Thus, requirements of different access rates are satisfied.
Step 3: The eGSN transmits the user-plane data from the UE to the external network such as the PDN over the selected path.

If the data stream is transmitted over path A, the eGSN may translate the source address of the data stream to the IP address of the eGSN through NAT. Thereby, although the UE uses one IP address, the data stream sent to the eGSN and GGSN has two different IP addresses from the perspective of the external Internet or Intranet. Accordingly, the public network can select different routes for the data packets and transmit the correct data stream respectively to the eGSN and GGSN.

If the data stream is transmitted over path B, the eGSN forwards the data stream directly to the RNC and the data stream is transmitted to the public network along path B.
2. As shown in FIG. 13, the procedure where the UE receives information from the public network includes:
   Step 1: The eGSN receives user-plane data destined for the UE from the public network.

Specifically, the eGSN receives the user-plane data from the public network also along two paths, the downlink directions of path A and path B.
Step 2: The eGSN sends the received user-plane data destined for the UE to the NodeB, which transmits the data stream (user-plane data) to the UE.

If the eGSN receives the user-plane data via path A in step 1, because the uplink data stream is NAT-processed, the eGSN must also perform NAT on the downlink data stream to change the destination address in the data stream to the IP address of the UE.

If the eGSN receives the user-plane data via path B, no NAT processing is required and the eGSN forwards the user-plane data directly.

In the procedure of data interaction with the public network via the eGSN, the procedure for selecting path A and path B for user-plane data exchanged with the public network via the eGSN is as follows:

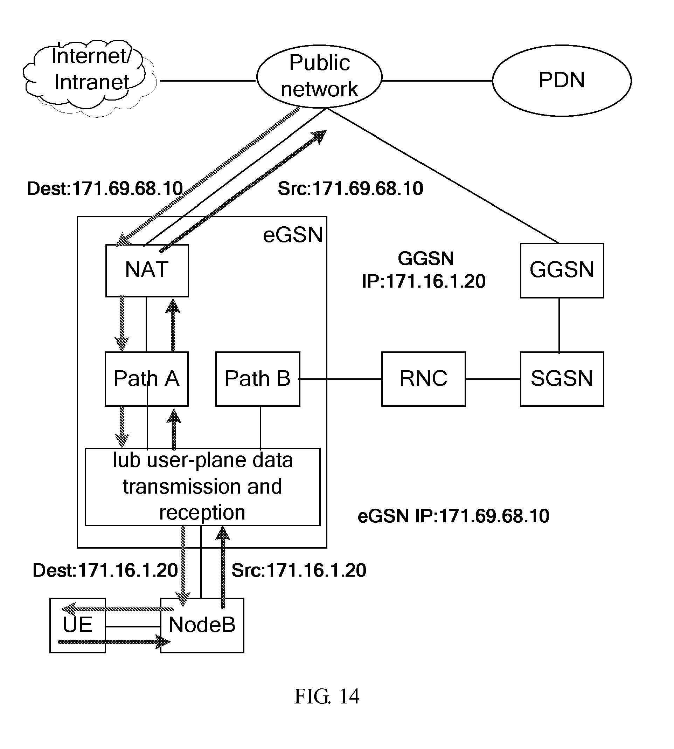

If the appropriate path selection policy (or filtering rule) is intended for all data streams of a certain session or a certain user, after the eGSN determines the data steams to be offloaded according to the path selection policy sent by the SGSN or GGSN, the eGSN may perform NAT locally on all received data packets of the session or the user to change the source address of the data packets to an IP address in the local IP address pool and send the NAT-processed data packets to the public network, such as the Internet or Intranet. That is, the eGSN translates the source IP address in the IP packet header to the IP address of the eGSN in the uplink direction and transmits the data packets to the uplink along the path shown by the arrows in FIG. 14. As shown in FIG. 14, after the eGSN receives the data packets returned from the Internet or Intranet, the eGSN must perform reverse NAT to change the destination IP address in the IP header in the downlink direction to the IP address of the UE and then the data packets are sent via the NodeB to the UE. It should be noted that the eGSN may not perform NAT on the data streams to be locally offloaded.

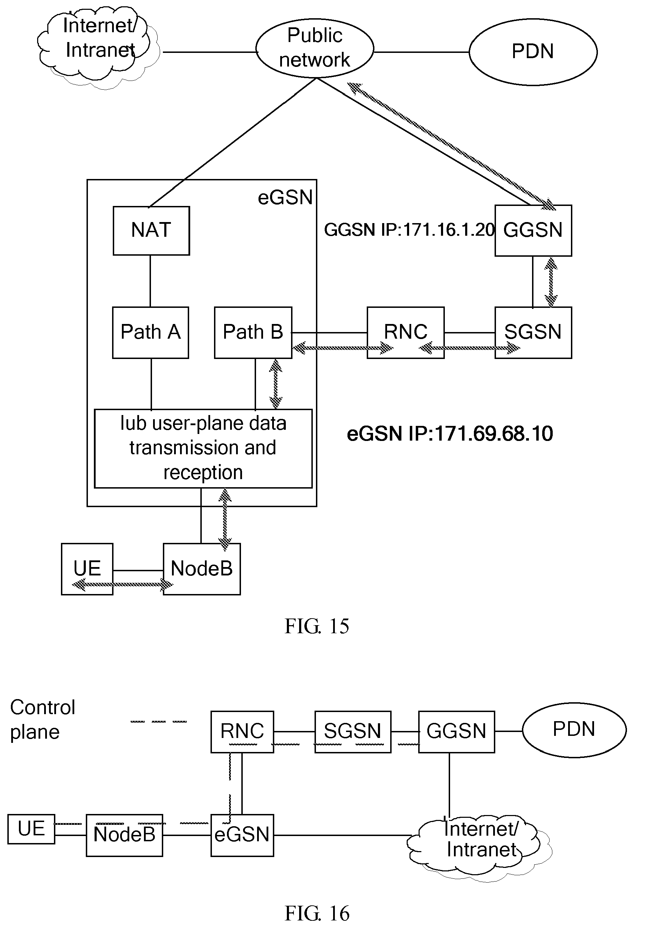

As shown in FIG. 15, if the appropriate path selection policy is intended for only partial data streams (for example, the path selection policy may be an IP quintuple), the eGSN matches the uplink data packets with the IP quintuple and filters the packets accordingly. The data streams not to be locally offloaded determined after the matching and filtering are transmitted to the RNC transparently along the path indicated by the arrows shown in FIG. 15 and afterwards sent to the PDN via the SGSN and GGSN sequentially. Still as shown in FIG. 15, if the eGSN receives a data stream destined for the UE in the downlink direction, the data stream is forwarded to the NodeB directly without the need of NAT and then transmitted to the UE by the NodeB.

### II. Procedure for obtaining the path selection policy

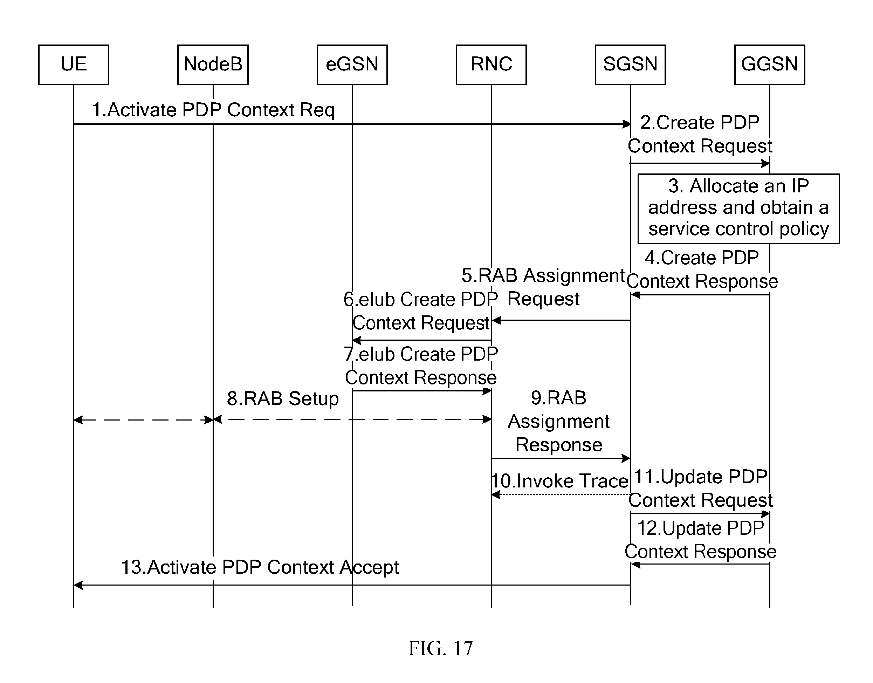

In the procedure where the eGSN obtains a filtering rule for creation of a forwarding relation, the path via which the eGSN obtains control-plane data is shown in FIG. 16. On the path, the eGSN may obtain the path selection policy via a PDP context activation procedure. As shown in FIG. 17, the procedure for obtaining the path selection policy may be as follows:
Steps 1 and 2: The SGSN receives an Activate PDP Context Request and sends a Create PDP Context Request to the GGSN.
Step 3: Upon reception of the Create PDP Context Request, the GGSN allocates an IP address to the UE and obtains an associated policy selection policy parameter.
Step 4: The GGSN sends a Create PDP Context Response to the SGSN. The response carries the IP address allocated to the UE and the obtained path selection policy parameter.

To enable the eGSN to obtain the filtering rule for data offloading correctly, the GGSN must be functionally extended to add the path selection policy parameter such as subscription information of the user, APN, QoS, or service type to the Create PDP Context Response.
Step 5: Upon reception of the Create PDP Context Response, the SGSN is functionally extended to transmit the path selection policy parameter transparently to the RNC through an RAB (Radio Access Bearer) Assignment Request.
Step 6: The RNC sends the path selection policy parameter to the eGSN through a Create PDP Context Request sent to the eGSN via the interface with the eGSN.
Step 7: The eGSN receives the Create PDP Context Request, extracts the path selection policy parameter from the message, and generates a path selection policy. In the mean time, the eGSN creates a local context, a forwarding table, and the forwarding relation between the NodeB and the Internet or Intranet. Then the eGSN sends a Create PDP Context Response to the RNC.

Thus, after the PDP context activation procedure is complete, the eGSN successfully obtains the filtering rule (path selection policy) to determine data streams to be offloaded and creates the forwarding relation between the NodeB and the Internet or Intranet.
Step 8: RAB setup messages are exchanged between the UE and the NodeB and between the NodeB and the RNC to create an appropriate radio access bearer.
Steps 9 to 13: The RNC may also execute a PDP context activation procedure with the SGSN and GGSN to facilitate the creation of the data transmission path which is from the MS and includes the NodeB, RNC, SGSN, and GGSN.

Specifically, steps 8 to 13 above may be a standard PDP context activation procedure in the prior art, where the eGSN only transmits the received messages transparently and no adaptive modification is required on the UE, NodeB, RNC, SGSN, and GGSN. The processing may directly follow the standard procedure.

Through the above procedure, the eGSN can obtain the path selection policy and thus provide a reference for the eGSN to perform local offloading.

### III. Mobility management processing procedure

Because of the mobility of the UE, the eGSN that corresponds to the UE changes and the UE needs to be handed over from one eGSN to another eGSN. For this purpose, an embodiment of the present invention provides a communications procedure when the eGSN changes. The procedure is as follows:

When determining that the eGSN changes, the SGSN or GGSN may control the new eGSN to offload data streams. That is, the SGSN or GGSN will send the new path selection policy or path selection policy parameter to the new eGSN, so as to enable the new eGSN to create the path selection policy and provide offload data streams for the associated UE. For an offloaded data stream, the eGSN may create a new session and continue the subsequent service processing through the new session. After the eGSN changes, data streams requiring no offloading may still be forwarded in the corresponding forwarding mode.

If the UE moves to a location where no eGSN exists, data streams that require offloading according to the path selection policy may also be forwarded along the path consisting of the RNC, SGSN and GGSN.

Through the mobility management, the embodiment of the present invention provides a feasible solution for access of a moving UE to the public network via the eGSN. This improves the usability of the public network access solution via the eGSN.

### IV. Charging and lawful intercept procedure

In the embodiment of the present invention, the eGSN may also support the corresponding charging or lawful intercept function, or support both the charging and lawful intercept functions.

### 1. Implementation of charging

To implement charging with respect to the data streams sent to the public network directly via the eGSN, the traffic of data streams locally offloaded by the eGSN is reported. That is, the eGSN may measure the traffic of locally offloaded data streams and send the measurement result to the SGSN or GGSN so that the SGSN or GGSN can implement charging according to the measurement result.

### 2. Implementation of lawful intercept

To implement lawful intercept with respect to the data streams sent to the public network directly via the eGSN, the eGSN may send a copy of the locally offloaded data streams to the SGSN or GGSN so that the SGSN or GGSN obtains the data information sent to the public network directly via the eGSN while the offloading is performed. The eGSN receives a message notifying the eGSN to receive the IP addresses of data packets to be lawfully intercepted and thus the eGSN can intercept data packets of the given IP addresses, that is, sending the data packets of the given IP addresses to the SGSN or GGSN.

Through the charging and lawful intercept procedure, data streams exchanged with the public network directly via the eGSN can also be monitored and managed so that the benefit of the operator is assured and that lawful intercept is reliably implemented in the network.

Those skilled in the art understand that all or partial procedures of the method in the embodiments of the present invention can be implemented by hardware under instructions of a computer program, which may be stored in a computer readable storage medium. When executed, the program includes the procedures of the method in the preceding embodiments. The storage medium may be a magnetic disk, a compact disk, a Read-Only Memory (ROM), or a Random Access Memory (ROM).

To sum up, the embodiments of the present invention improve the transmission efficiency of the mobile network effectively through a flat network structure so as to meet the high-rate service requirements of users.

Specifically, a session of a UE may access an external network (public network) such as the Internet through the local offloading function of the eGSN or access an external network (public network) such as the PDN of the mobile operator through the GGSN. If Internet access is enabled through the local offloading of the eGSN, because the transmission path is shorter, the service transmission delay is reduced and the efficiency of service transmission is therefore increased. When the eGSN cannot offload data streams locally, the UE can still access external networks such as the Internet via the GGSN. This assures the flexibility of network applications and the compatibility with the prior art.

In addition, the embodiments of the present invention can utilize the existing network devices to construct the communications network to the maximum extent and therefore the efficiency of service transmission is increased effectively without the need of major modifications to the functions of existing network devices.

In conclusion, the above are merely exemplary embodiments of the present invention. However, the scope of the present invention is not limited thereto. Changes or replacements readily apparent to persons skilled in the prior art within the technical scope of the present invention should fall within the scope of the present invention. Therefore, the protection scope of the present invention is subject to the appended claims.

## Claims

1. An enhanced General Packet Radio Service (GPRS) Support Node (eGSN), comprising a public network interface for communicating with a public network, a NodeB interface for communicating with a NodeB, and an information transceiving unit, configured to transmit information between the NodeB and the public network via the public network interface and the NodeB interface.

2. The eGSN of claim 1, further comprising:
an address translating unit, configured to translate a source address in a packet sent to the public network via the public network interface to a local address, and translate a destination address in a packet sent to a User Equipment (UE) via the NodeB interface to an address of the UE.

3. The eGSN of claim 1 or 2, the eGSN further comprising at least one of an RNC interface for communicating with a Radio Network Controller (RNC), an SGSN interface for communicating with a Serving GPRS Support Node (SGSN) or a GGSN interface for communicating with a Gateway GPRS Support Node (GGSN).

4. The eGSN of claim 3, the eGSN further comprising:
a path selecting unit, configured to select to send information from the NodeB via the RNC interface, SGSN interface, GGSN interface or public network interface according to a predetermined path selection policy.

5. The eGSN of claim 4, the eGSN further comprising:
a path selection policy obtaining unit, configured to: obtain a path selection policy or a path selection policy parameter, and generate a path selection policy according to the path selection policy parameter; and
a path selection policy storing unit, configured to store the path selection policy obtained by the path selection policy obtaining unit and provide the path selection policy for the path selecting unit.

6. The eGSN of claim 5, wherein the path selection policy obtaining unit receives a path selection policy or path selection policy parameter from the GGSN, wherein the path selection policy is information of a path selection mode predetermined according to at least one item of subscription information of a user, Access Point Name (APN), Quality of Service (QoS) parameter, and service type; and the path selection policy parameter comprises at least one item of subscription information of the user, APN, QoS parameter, and service type.

7. The eGSN of claim 6, wherein the path selection policy obtaining unit obtains the path selection policy or the path selection policy parameter from the GGSN through messages in a Packet Data Protocol (PDP) context activation procedure.

8. The eGSN of claim 1 or 2, the eGSN further comprising:
an auxiliary managing unit, configured to send at least one of data transmitted via the public network interface and traffic of data transmitted via the public network interface to the SGSN or GGSN.

9. A method for high-rate access to a public network from a mobile network, comprising:
transmitting, by an enhanced General Packet Radio Service (GPRS) Support Node (eGSN), information between a NodeB and the public network via a public network interface of the eGSN for communicating with the public network and a NodeB interface of the eGSN for communicating with the NodeB.

10. The method of claim 9, wherein the step of transmitting the information between the NodeB and the public network comprises:
by the eGSN, translating a source address in a packet sent to the public network via the public network interface to a local address and sending the packet to the public network, and translating a destination address of a packet sent to a User Equipment (UE) via the NodeB interface to an address of the UE and sending the packet to the UE via the NodeB.

11. The method of claim 9 or 10, wherein the step of transmitting the information between the NodeB and the public network comprises a process of sending information received from the NodeB to the public network, and the process comprises:
after the eGSN receives the information from the NodeB, selecting to send the information from the NodeB via an RNC interface for communications between the eGSN and a Radio Network Controller (RNC), or an SGSN interface for communications between the eGSN and a Serving GPRS Support Node (SGSN), or a GGSN interface for communications between the eGSN and a Gateway GPRS Support Node (GGSN), or the public network interface according to a predetermined path selection policy.

12. The method of claim 11, the method further comprising:
by the eGSN, obtaining and storing the path selection policy from the GGSN, wherein the path selection policy is information of a path selection mode predetermined according to at least one item of subscription information of a user, Access Point Name (APN), Quality of Service (QoS) parameter, and service type;
or,
by the eGSN, obtaining a path selection policy parameter from the GGSN, and generating and storing a path selection policy according to the path selection policy parameter, wherein the path selection policy parameter comprises at least one item of subscription information of the user, APN, QoS parameter, and service type.

13. The method of claim 12, wherein the obtaining comprises:
obtaining, by the eGSN, the path selection policy or the path selection policy parameter from the GGSN through messages in a Packet Data Protocol (PDP) context activation procedure.

14. The method of claim 9 or 10, wherein the eGSN further sends at least one item of data transmitted via the public network interface and traffic of data transmitted via the public network interface to the SGSN or GGSN.

15. A system for high-rate access to a public network from a mobile network, comprising:
at least one enhanced General Packet Radio Service (GPRS) Support Node (eGSN) of any of claims 1-8, which is configured to provide an information transmission path between a NodeB and the public network to implement information transmission between the NodeB and the public network.

16. The system of claim 15, further comprising a Gateway GPRS Support Node (GGSN) which comprises a handover managing unit configured to send a path selection policy or a path selection policy parameter to a new eGSN when a serving eGSN of a User Equipment (UE) changes, wherein the path selection policy is information of a path selection mode predetermined according to at least one item of subscription information of a user, Access Point Name (APN), Quality of Service (QoS) parameter, and service type and the path selection policy parameter comprises at least one item of subscription information of the user, APN, QoS parameter, and service type.

17. A system for high-rate access to a public network from a mobile network, comprising at least one enhanced General Packet Radio Service (GPRS) Support Node (eGSN) of any of claims 1-8 and at least one NodeB, wherein the eGSN is configured to provide an information transmission path between the NodeB and the public network to implement information transmission between the NodeB and the public network.

18. The system of claim 17, further comprising:
a Radio Network Controller (RNC), a Serving GPRS Support Node (SGSN), and a Gateway GPRS Support Node (GGSN), wherein the eGSN also communicates with the public network via the RNC, SGSN, and GGSN in sequence;
or,
an SGSN and a GGSN, wherein the eGSN also communicates with the public network via the SGSN and GGSN in sequence;
or,
a GGSN, wherein the eGSN communicates with the public network via the GGSN.

19. The system of claim 17 or 18, wherein the eGSN is placed between the RNC and the SGSN.

20. The system of claim 17 or 18, wherein the eGSN is built in any other network element in a communications network or placed in a communications network as a standalone network element.
